# FASCICULE DE BREVET EUROPEEN

(11) **EP 3 520 464 B1**
(45) Date de publication et mention de la délivrance du brevet: **28.10.2020**
(21) Numéro de dépôt: 17787228.0
(22) Date de dépôt: 28.09.2017
(51) Int. Cl.: H04W 24/10

(54) **PROCÉDÉ ET SYSTÈME POUR EFFECTUER DES MESURES RADIO DANS UN RÉSEAU MOBILE**
VERFAHREN UND SYSTEM ZUR VERWALTUNG VON FUNKMESSUNGEN IN EINEM MOBILEN NETZWERK
METHOD AND SYSTEM FOR PERFORMING RADIO MEASUREMENTS IN A MOBILE NETWORK

(30) Priorité: 30.09.2016 FR 1659461
(43) Date de publication de la demande: 07.08.2019
(73) Titulaire: ORANGE, 75015 Paris (FR)
(72) Inventeur: JAZIRI, Aymen, 92326 Châtillon Cedex (FR)
(86) Numéro de dépôt international: PCT/FR2017/052653
(87) Numéro de publication internationale: WO 2018/060640

(56) Documents cités:
- EP-A2- 2 217 020
- WO-A1-2010/056181
- WO-A1-2014/063747

## Description

La présente invention concerne les mesures radio réalisées dans un réseau de radiocommunication cellulaire (également appelé réseau mobile). L'invention est compatible avec toutes les technologies d'accès radio connues (TDMA, CDMA, W-CDMA, OFDMA, et ainsi de suite). Elle s'applique notamment aux réseaux mobiles utilisant la technologie GSM (*Global System for Mobile Communications*), telle que définie dans la version 97 et les versions ultérieures de la norme GSM, ou la technologie UMTS (*Universal Mobile Télécommunications System*), telle que définie notamment dans les normes 23.002, 23.003 et 29.060 du projet 3GPP (*Third-Generation Partnership Project*), ou la norme LTE (*Long Term Evolution*), ou encore la norme HSPA (*High Speed Packet Access*).

La gestion des ressources radio dans un réseau de radiocommunication repose en général sur des mesures radio qui sont effectuées dans ce réseau. Une telle gestion de ressources radio peut être plus ou moins complexe et requérir des mesures radio de différents types.

Les opérateurs doivent naturellement veiller à assurer un débit de communication suffisant à tous leurs abonnés. Pour ce faire, ils doivent notamment identifier rapidement les zones d'une cellule où le trafic de communications est significativement supérieur au trafic moyen dans la cellule (une telle zone est habituellement désignée par le mot anglais « *hotspot* ») en raison, par exemple, d'un évènement d'envergure comme un rassemblement temporaire, ou d'une catastrophe naturelle ; en effet, la qualité des communications des abonnés situés dans ces zones congestionnées est dégradée. L'identification des « *hotspots* » permet de mettre en place des moyens de délestage (« *offload* » en anglais), tels que par exemple l'envoi sur place d'un relais de télécommunications.

Les opérateurs ont également la nécessité de gérer l'interfonctionnement entre différents réseaux de radiocommunication, par exemple aux fins de gestion de la mobilité d'un terminal depuis un réseau vers un autre réseau. Un tel interfonctionnement repose sur une gestion des ressources radio qui peut s'avérer être complexe et n'est efficace que si elle exploite des mesures radio pertinentes relatives aux différents réseaux considérés.

Dans le cadre de ces mesures radio, il a été prévu par exemple d'établir une cartographie d'interférences qui permet de déterminer le niveau d'interférences à un instant donné et en des localisations géographiques précises. A partir d'un tel niveau d'interférences, il est ensuite possible de déterminer l'utilisation réelle qui est faite du spectre des fréquences à un instant donné et en des localisations géographiques précises. Une telle cartographie d'interférences permet de détecter des problèmes dus à la propagation dans le réseau considéré. Elle permet aussi de détecter qu'un réseau voisin géographiquement du réseau considéré utilise les mêmes bandes de fréquences ou des bandes de fréquences adjacentes. La connaissance de l'utilisation réelle du spectre des fréquences permet alors d'optimiser l'utilisation du spectre de fréquence dans le réseau. Par exemple, on connaît ainsi les parties de ce spectre de fréquences qui ne sont pas utilisées à certains endroits et à un instant donné par les terminaux d'un réseau dit primaire ; il est alors possible d'en faire bénéficier des terminaux qui eux peuvent appartenir à un réseau de radiocommunication secondaire différent de ce réseau primaire, lorsqu'il est estimé qu'une telle utilisation des fréquences par le réseau secondaire ne perturbera pas le réseau primaire.

Des mesures de conditions radio dans un réseau peuvent être avantageusement effectuées dans ce réseau par des terminaux appartenant à des usagers du réseau (par opposition à des terminaux manipulés par les équipes opérationnelles). Il est ainsi prévu que les terminaux mobiles, appartenant à un réseau radio mobile terrestre tel qu'un réseau GSM, ou un réseau UMTS, ou encore un réseau EDGE (*Enhanced Data rates for GSM Evolution*), effectuent dans le réseau considéré des mesures de manière périodique ou suite à des événements prédéfinis.

Ainsi, le document intitulé « *MDT Measurement Model* », proposé à la réunion #68bis du groupe de normalisation RAN WG2 du 3GPP (Valence, Espagne, 18-22 janvier 2010), décrit un système de mesures radio dans lequel une entité de gestion d'un réseau d'accès radio UTRAN (*UMTS Terrestrial Radio Access Network*) diffuse un message requérant la mise en œuvre, par des terminaux mobiles d'usagers, d'une mesure de nature spécifiée dans une zone géographique spécifiée (ce système est connu sous le nom de « *Minimization of Drive Tests* », ou MDT, en anglais). Les terminaux du réseau recevant la requête décident ou non d'effectuer la mesure requise, en particulier, en fonction du fait qu'ils sont situés ou non dans cette zone de mesure, ce qu'ils peuvent déterminer au moyen d'un dispositif de positionnement, tel qu'un dispositif GPS (*Global Positioning System*), dont ils sont équipés ; chaque terminal ayant effectué la mesure est apte à stocker les résultats de cette mesure, et à les transmettre audit réseau UTRAN à un instant prédéterminé.

Un terminal mobile attaché à un réseau donné peut également effectuer des mesures sur d'autres réseaux voisins géographiquement de celui auquel il est attaché, en particulier dans le but de gérer une mobilité inter-réseaux. Le terminal mobile mesure alors un niveau de puissance ou encore estime un niveau de qualité relativement au canal pilote pour un certain nombre de stations de bases du réseau voisin, afin d'en choisir une en tant que cible potentielle pour une éventuelle mobilité inter-réseaux.

Cependant, le système MDT présente les inconvénients suivants :
- on utilise toujours la localisation GPS pour collecter ces mesures ; comme l'activation du GPS consomme beaucoup d'énergie au niveau de la batterie (il s'agit en effet d'une communication satellitaire), la plupart des mobiles n'activent pas leur module GPS tout le temps ; le réseau doit donc localiser de tels mobiles au moyen d'une technique de triangulation, qui n'est pas très précise et qui demande des capacités de calculs importantes ;
- la localisation de trafic à l'intérieur d'un bâtiment (« *indoor* » en anglais) par exemple dans les centres commerciaux, les salles de cinéma, de concert, les conférences, est peu précise en raison du mauvais fonctionnement du GPS en *indoor ;*
- le résultat de ces mesures étant transmis par les terminaux qui les ont effectuées aux stations de base du réseau, il peut en résulter une charge de signalisation importante pour le réseau ; et
- une entité réseau établit, à partir de ces mesures, une classification des mobiles sur la base de leurs positions ainsi que du type de trafic demandé et de la qualité de service requise pour les mobiles ; or ce travail de classification est considérable.

Le document EP 2 217 020 décrit un procédé de contrôle et un système de communication assurant le déclenchement sécurisé d'un second usage d'un spectre de communication via une coopération entre une pluralité de dispositifs de communication.

La présente invention concerne donc un procédé de mesure radio dans un réseau mobile, comprenant les étapes suivantes :
- une station de base dudit réseau mobile émet un message de requête de mesure radio,
- ledit message de requête est reçu et pris en compte par au moins un terminal mobile, dit supra-mobile, situé dans la zone de couverture de la station de base,
- ledit supra-mobile diffuse un signal reconnaissable par les terminaux mobiles situés dans son voisinage,
- au moins un terminal mobile, dit terminal mesureur, suite à la réception dudit signal émis par le supra-mobile, répond au supra-mobile en lui envoyant au moins un paramètre radio relatif à une communication en cours ou envisagée dudit terminal mesureur avec la station de base,
- le supra-mobile compile les paramètres radio reçus pour obtenir des compilations de paramètres radio, dites statistiques, et
- le supra-mobile active sa localisation si elle n'est pas déjà activée, et envoie sa position et lesdites statistiques à ladite station de base.

Ainsi, la présente invention propose que la collecte de paramètres radio dans un réseau mobile soit réalisée par l'intermédiaire de terminaux mobiles particuliers, que l'on appellera « supra-mobiles », chacun de ces supra-mobiles étant chargé de collecter des paramètres radio envoyés par des terminaux mobiles proches du supra-mobile, de compiler ces paramètres pour constituer ce que l'on appellera des « statistiques », avant d'envoyer ces statistiques à la station de base à laquelle le supra-mobile est attaché.

La station de base, ou une entité réseau à qui la station de base transmet lesdites statistiques, peut alors comparer les statistiques des différentes zones du réseau mobile, par exemple en termes de conditions radio et de trafic demandé, en relation avec la localisation de ces zones.

Grâce à ces dispositions, le réseau mobile peut, de façon peu coûteuse en termes de matériels et de consommation d'énergie, connaître la valeur de tel ou tel paramètre radio dans la cellule, et, notamment, localiser avec précision les zones de congestion pour pouvoir y porter remède efficacement (de manière connue en soi).

L'invention présente de nombreux autres avantages par rapport à l'état de l'art. Ainsi :
- elle requiert, au niveau de la station de base ou de ladite entité réseau, moins de traitements et de calculs puisqu'un seul mobile par zone du réseau remonte ses coordonnées GPS avec les informations collectées dans son voisinage ;
- elle permet une meilleure localisation du trafic (pourvu que la position du supra-mobile soit remontée sans erreur) ; en effet, il est plus facile d'obliger un supra-mobile à activer son GPS (en plus de son Wi-Fi en *indoor*) pour une courte durée que d'obliger tous les terminaux à le faire (d'ailleurs, dans les techniques MDT, on n'oblige pas les mobiles à activer leurs GPS) ;
- les remontées de paramètres radio provoquent moins d'interférences ; et
- le nombre d'échanges entre les terminaux et la station de base à laquelle ils sont attachés est réduit.

On notera par ailleurs que :
- l'échange d'informations entre les supra-mobiles et les terminaux ordinaires peut s'effectuer au moyen de messages de contrôle sécurisés de manière classique ; d'autre part, les paramètres radio fournis par les terminaux mobiles ordinaires seront de préférence traités par les supra-mobiles de façon anonyme afin de ne pas porter atteinte à la vie privée des utilisateurs et de ne pas divulguer leurs déplacements, seules la position des supra-mobiles et lesdites statistiques étant enregistrées et traitées par le réseau ; il n'y a donc pas de problème de confidentialité, et la mise en œuvre de l'invention ne requiert aucune mesure de sécurité dédiée ; et
- la mise en œuvre de l'invention n'impose aucune augmentation de consommation énergétique dans les mobiles d'utilisateur ; au contraire, la remontée de paramètres radio d'un terminal mobile vers un supra-mobile, qui est généralement plus proche du terminal mobile que ne l'est la station de base, consomme moins d'énergie dans ce terminal mobile que la remontée classique de paramètres radio directement vers la station de base.

Il en résulte une amélioration sensible du ressenti et de la satisfaction des utilisateurs des terminaux mobiles mettant en œuvre l'invention.

Selon des caractéristiques particulières, ladite station de base choisit préalablement, de manière dynamique, dans au moins une zone de taille prédéfinie, au moins un terminal mobile d'abonné pour en faire un supra-mobile.

De telles dispositions supposent naturellement que les terminaux mobiles du marché soient généralement équipés des moyens requis pour jouer le rôle de supra-mobiles.

Grâce à ces dispositions, à tout instant où le réseau mobile a besoin de connaître la valeur de tel ou tel paramètre radio dans une cellule, la station de base de cette cellule pourra sélectionner, parmi les terminaux mobiles situés dans la cellule et dont la position est connue, un ensemble apte à assurer un maillage adéquat de la cellule.

On notera à cet égard que, dans l'état de l'art, l'utilisation d'agents embarqués dans les terminaux mobiles pour mettre en œuvre les techniques MDT n'est pas mentionnée dans les contrats d'abonnement entre les opérateurs réseau et les utilisateurs ; on peut donc envisager que, de même, la sélection d'un terminal mobile pour jouer le rôle de supra-mobile pourrait ne pas être déclarée à l'utilisateur de ce terminal mobile.

Selon d'autres caractéristiques particulières, ledit supra-mobile est un terminal mobile présélectionné.

Par « présélectionné », on entend ici que ce terminal mobile a été chargé (généralement par l'opérateur réseau) de jouer le rôle de supra-mobile pour toutes lesdites requêtes émises par une station de base.

Grâce à ces dispositions, la station de base est dispensée de la tâche de sélectionner, parmi les terminaux mobiles d'abonnés situés dans la cellule, un certain nombre de terminaux mobiles pour jouer le rôle de supra-mobiles.

Corrélativement, selon un deuxième aspect, l'invention concerne un terminal mobile, dit supra-mobile. Ledit supra-mobile est remarquable en ce qu'il comprend des moyens pour :
- recevoir et prendre en compte un message de requête de mesure radio émis par une station de base d'un réseau mobile à laquelle il est attaché,
- diffuser un signal reconnaissable par les terminaux mobiles situés dans son voisinage,
- recevoir, de la part d'au moins un terminal mobile, dit terminal mesureur, ayant reçu ledit signal, au moins un paramètre radio relatif à une communication en cours ou envisagée dudit terminal mesureur avec la station de base,
- compiler les paramètres radio reçus pour obtenir des compilations de paramètres radio, dites statistiques, et
- activer sa localisation si elle n'est pas déjà activée, et envoyer sa position et lesdites statistiques à ladite station de base.

Les avantages offerts par ce supra-mobile sont essentiellement les mêmes que ceux offerts par les procédés corrélatifs succinctement exposés ci-dessus.

On notera qu'il est possible de réaliser ce supra-mobile dans le contexte d'instructions logicielles et/ou dans le contexte de circuits électroniques.

C'est pourquoi l'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de mesure radio succinctement exposé ci-dessus, lorsqu'il est exécuté sur un ordinateur.

Selon un troisième aspect, l'invention concerne un système de mesures radio dans un réseau mobile, comprenant :
- au moins un supra-mobile tel que décrit succinctement ci-dessus,
- au moins un terminal mobile, dit terminal mesureur, comprenant des moyens pour :
   - recevoir et prendre en compte ledit signal émis par ledit supra-mobile,
   - déterminer au moins un paramètre radio relatif à une communication en cours ou envisagée dudit terminal mesureur avec la station de base, et
   - envoyer ledit paramètre radio au supra-mobile, et
      - au moins une station de base dudit réseau mobile, comprenant des moyens pour :
         - émettre un message de requête de mesure radio, et
         - recevoir de la part dudit supra-mobile, et prendre en compte, la position du supra-mobile ainsi que lesdites statistiques.

Les avantages offerts par ce système sont essentiellement les mêmes que ceux offerts par le procédé de mesure radio succinctement exposé ci-dessus.

D'autres aspects et avantages de l'invention apparaîtront à la lecture de la description détaillée ci-dessous de modes de réalisation particuliers, donnés à titre d'exemples non limitatifs.

On rappelle tout d'abord que l'on connaît diverses méthodes pour détecter des *hotspots.*

Par exemple, une première méthode, appelée « projection de trafic » (cf. la demande EP 1168866), est fondée sur des métriques définies et stockées au niveau de l'entité O&M (« *Operation and Maintenance Center* ») du réseau.

Une deuxième méthode (cf. A. Jaziri, R. Nasri et T. Chahed, « Traffic Hotspot localization in 3G and 4G wireless networks using OMC metric », in Proc. IEEE PIMRC, pages 270 à 274, septembre 2014) est fondée sur l'utilisation de cinq indicateurs de performance, à savoir la charge, les débits des cellules et des utilisateurs, le degré de voisinage, les statistiques de la distribution de l'Avance Temporelle (« *Timing Advance* » en anglais) et de l'angle d'arrivée, qui sont projetés sur une carte de couverture réseau.

Une troisième méthode est fondée principalement sur les sondes et l'analyse des traces. Malgré son coût important, cette méthode est la plus utilisée par les équipes opérationnelles. Selon cette méthode, la localisation se fait pour chaque utilisateur individuellement en exploitant les traces stockées dans des serveurs à grandes capacités de mémoire. Les traces les plus utilisées sont : des données GPS remontées par le mobile, la proximité d'un *hotspot* WiFi, le niveau de champ remonté par le mobile et l'identifiant de cellule.

On peut aussi utiliser d'autres méthodes de localisation comme la triangulation (cf. A. Roxin et al., « Survey of Wireless Geolocation Techniques », in IEEE Globecom Workshops, 2007).

On notera à cet égard que la présente invention facilite sensiblement la détection de *hotspots.*

On va décrire à présent un mode de réalisation du procédé de mesure radio selon l'invention.

Selon une étape S1, une station de base d'un réseau cellulaire émet un message de requête sur un canal de contrôle, par exemple le canal CBCH (initiales des mots anglais « *Cell Broadcast Channel* » signifiant « Canal de Diffusion de Cellule ») qui est utilisé pour la diffusion d'informations spécifiques (informations routières, météo, et ainsi de suite). La station de base peut par exemple envoyer de tels messages périodiquement, ou lorsque la charge dans la cellule dépasse un certain seuil définissant un état de congestion dans la cellule, ou sur demande d'une entité réseau.

Selon une étape S2, ce message de requête est reçu et pris en compte par les supra-mobiles situés dans la zone de couverture de la station de base.

Selon une étape S3, chaque supra-mobile diffuse, sur un canal de contrôle dédié, par exemple en mode « *device-to-device* » (D2D) ou par Bluetooth, un signal à faible portée reconnaissable par les terminaux mobiles situés dans son voisinage. Ce canal de diffusion dédié peut par exemple être une sorte de RACH (initiales des mots anglais « *Random-Access Channel* » signifiant « Canal à Accès Aléatoire ») ; on rappelle qu'un RACH est un canal partagé utilisé par les terminaux mobiles de réseaux TDMA, FDMA et CDMA notamment aux fins d'établissement de communication.

Selon une étape S4, au moins un terminal mobile, dit terminal mesureur, suite à la réception d'un signal émis par un supra-mobile, répond à ce supra-mobile sur un canal dédié en lui envoyant au moins un paramètre radio relatif à une communication radio en cours ou envisagée dudit terminal mesureur avec la station de base. Le terminal mesureur peut par exemple :
- envoyer au supra-mobile le résultat de mesures concernant une communication en cours avec la station de base, telles que le Rapport Signal sur Interférences (*Signal-to-Interference Ratio,* ou SIR en anglais) du lien montant, ou la Réserve de Puissance du terminal mesureur (*UE Power Headroom,* ou UPH en anglais), ou la Puissance Reçue d'un Signal de Référence (*Reference Signal Received Power,* ou RSRP en anglais), ou encore la Qualité de Réception d'un Signal de Référence (*Reference Signal Received Quality,* ou RSRQ en anglais), ou
- indiquer au supra-mobile, au moyen d'une signalisation codée sur quelques bits, la quantité de trafic dont le terminal mesureur aura besoin dans une future communication avec la station de base, compte tenu du service concerné (FTP, Voix, Streaming vidéo, et ainsi de suite).

On peut prévoir que *tous* les terminaux mobiles ayant reçu le signal de la part d'un supra-mobile se comportent comme des terminaux mesureurs, c'est-à-dire lui répondent en lui envoyant au moins un paramètre radio. En variante, on peut prévoir que seuls les terminaux mobiles souhaitant un débit supérieur à un certain seuil se comportent comme des terminaux mesureurs ; dans ce cas, les terminaux mobiles qui sont inactifs ou qui consomment relativement peu de bande passante ne répondent pas au signal émis par le supra-mobile.

Selon une étape S5, chaque supra-mobile compile les paramètres radio reçus pour obtenir ce que l'on appellera des « statistiques », telles que le nombre d'utilisateurs actifs par service, ou le nombre d'utilisateurs situés dans la zone de la cellule environnante, ou encore une moyenne sur le Rapport Signal sur Interférences pour les utilisateurs situés dans cette zone de la cellule.

Enfin, selon une étape S6, chaque supra-mobile active sa localisation (GPS et/ou WiFi) au moins momentanément, si elle n'est pas déjà activée, et envoie sa position et ses statistiques à la station de base. Ces statistiques seront traitées par la station de base, ou envoyées à une entité réseau chargée d'effectuer ce traitement.

L'invention peut être mise en œuvre au sein de nœuds de réseaux de communication, par exemple des terminaux mobiles et des stations de base d'un réseau cellulaire, au moyen de composants logiciels et/ou matériels.

Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés de mesure radio selon l'invention.

En effet, l'invention vise aussi un programme d'ordinateur téléchargeable depuis un réseau de communication comprenant des instructions pour l'exécution des étapes d'un procédé de mesure radio selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé *via* un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de mesure radio selon l'invention.

## Revendications

1. Procédé de mesure radio dans un réseau mobile, comprenant les étapes suivantes :
- une station de base dudit réseau mobile émet un message de requête de mesure radio,
- ledit message de requête est reçu et pris en compte par au moins un terminal mobile, dit supra-mobile, situé dans la zone de couverture de la station de base,
- ledit supra-mobile diffuse un signal reconnaissable par les terminaux mobiles situés dans son voisinage,
- au moins un terminal mobile, dit terminal mesureur, suite à la réception dudit signal émis par le supra-mobile, répond au supra-mobile en lui envoyant au moins un paramètre radio relatif à une communication en cours ou envisagée dudit terminal mesureur avec la station de base,
- le supra-mobile compile les paramètres radio reçus pour obtenir des compilations de paramètres radio, dites statistiques, et
- le supra-mobile active sa localisation si elle n'est pas déjà activée, et envoie sa position et lesdites statistiques à ladite station de base.

2. Procédé de mesures radio selon la revendication 1, **caractérisé en ce que** ladite station de base choisit préalablement, de manière dynamique, dans au moins une zone de taille prédéfinie, au moins un terminal mobile d'abonné pour en faire un supra-mobile.

3. Procédé de mesures radio selon la revendication 1, **caractérisé en ce que** ledit supra-mobile est un terminal mobile présélectionné.

4. Procédé de mesures radio selon l'une quelconque des revendications 1 à 3, **caractérisé en ce que** tous les terminaux mobiles ayant reçu ledit signal de la part d'un supra-mobile répondent audit supra-mobile en lui envoyant au moins un paramètre radio.

5. Procédé de mesures radio selon l'une quelconque des revendications 1 à 3, **caractérisé en ce que**, parmi les terminaux mobiles ayant reçu ledit signal de la part d'un supra-mobile, seuls ceux souhaitant un débit supérieur à un certain seuil répondent audit supra-mobile en lui envoyant au moins un paramètre radio.

6. Terminal mobile, dit supra-mobile, comprenant des moyens pour :
- recevoir et prendre en compte un message de requête de mesure radio émis par une station de base d'un réseau mobile à laquelle il est attaché,
- diffuser un signal reconnaissable par les terminaux mobiles situés dans son voisinage,
- recevoir, de la part d'au moins un terminal mobile, dit terminal mesureur, ayant reçu ledit signal, au moins un paramètre radio relatif à une communication en cours ou envisagée dudit terminal mesureur avec la station de base,
- compiler les paramètres radio reçus pour obtenir des compilations de paramètres radio, dites statistiques, et
- activer sa localisation si elle n'est pas déjà activée, et envoyer sa position et lesdites statistiques à ladite station de base.

7. Système de mesures radio dans un réseau mobile, comprenant :
- au moins un supra-mobile selon la revendication 6,
- au moins un terminal mobile, dit terminal mesureur, comprenant des moyens pour :
• recevoir et prendre en compte ledit signal émis par ledit supra-mobile,
• déterminer au moins un paramètre radio relatif à une communication en cours ou envisagée dudit terminal mesureur avec la station de base, et
• envoyer ledit paramètre radio au supra-mobile, et
- au moins une station de base dudit réseau mobile, comprenant des moyens pour :
• émettre un message de requête de mesure radio, et
• recevoir de la part dudit supra-mobile, et prendre en compte, la position du supra-mobile ainsi que lesdites statistiques.

8. Moyen de stockage de données inamovible, ou partiellement ou totalement amovible, comportant des instructions de code de programme informatiaue qui, lorsqu'elles sont exécutées par un ordinateur, conduisent celui-ci à mettre en œuvre les étapes d'un procédé de mesure radio selon l'une quelconque des revendications 1 à 5.

9. Programme d'ordinateur téléchargeable depuis un réseau de communication et/ou stocké sur un support lisible par ordinateur et/ou exécutable par un microprocesseur, comprenant des instructions, qui, lorsqu'elles sont exécutées par l'ordinateur ou par le microprocesseur, conduisent celui-ci à mettre en œuvre les étapes d'un procédé de mesure radio selon l'une quelconque des revendications 1 à 5.

## Patentansprüche

1. Funkmessverfahren in einem Mobilfunknetz, das die folgenden Schritte enthält:
- eine Basisstation des Mobilfunknetzes sendet eine Funkmessanforderungsnachricht,
- die Anforderungsnachricht wird von mindestens einem mobilen Endgerät, mobiles Supra-Endgerät genannt, empfangen und berücksichtigt, das sich im Versorgungsgebiet der Basisstation befindet,
- das mobile Supra-Endgerät verbreitet ein von den sich in seiner Nähe befindlichen mobilen Endgeräten erkennbares Signal,
- mindestens ein mobiles Endgerät, Mess-Endgerät genannt, antwortet nach dem Empfang des vom mobilen Supra-Endgerät gesendeten Signals dem mobilen Supra-Endgerät, indem es ihm mindestens einen Funkparameter bezüglich einer aktuellen oder beabsichtigten Kommunikation des Mess-Endgeräts mit der Basisstation schickt,
- das mobile Supra-Endgerät kompiliert die empfangenen Funkparameter, um Statistiken genannte Funkparameter-Kompilierungen zu erhalten, und
- das mobile Supra-Endgerät aktiviert seine Lokalisierung, wenn sie noch nicht aktiviert ist, und schickt seine Position und die Statistiken an die Basisstation.

2. Funkmessverfahren nach Anspruch 1, **dadurch gekennzeichnet, dass** die Basisstation vorab dynamisch in mindestens einem Bereich vordefinierter Größe mindestens ein mobiles Teilnehmer-Endgerät wählt, um daraus ein mobiles Supra-Endgerät zu machen.

3. Funkmessverfahren nach Anspruch 1, **dadurch gekennzeichnet, dass** das mobile Supra-Endgerät ein vorausgewähltes mobiles Endgerät ist.

4. Funkmessverfahren nach einem der Ansprüche 1 bis 3, **dadurch gekennzeichnet, dass** alle mobilen Endgeräte, die das Signal von einem mobilen Supra-Endgerät empfangen haben, dem mobilen Supra-Endgerät antworten, indem sie ihm mindestens einen Funkparameter schicken.

5. Funkmessverfahren nach einem der Ansprüche 1 bis 3, **dadurch gekennzeichnet, dass** unter den mobilen Endgeräten, die das Signal von einem mobilen Supra-Endgerät empfangen haben, nur diejenigen, die eine höhere Übertragungsrate als ein bestimmter Schwellwert wünschen, dem mobilen Supra-Endgerät antworten, indem sie ihm mindestens einen Funkparameter schicken.

6. Mobiles Endgerät, mobiles Supra-Endgerät genannt, das Einrichtungen enthält, um:
- eine Funkmessanforderungsnachricht zu empfangen und zu berücksichtigen, die von einer Basisstation eines Mobilfunknetzes gesendet wird, mit dem es verknüpft ist,
- ein von den in seiner Nachbarschaft befindlichen mobilen Endgeräten erkennbares Signal zu verbreiten,
- von mindestens einem mobilen Endgerät, Mess-Endgerät genannt, das das Signal empfangen hat, mindestens einen Funkparameter bezüglich einer aktuellen oder beabsichtigten Kommunikation des Mess-Endgeräts mit der Basisstation zu empfangen,
- die empfangenen Funkparameter zu kompilieren, um Statistiken genannte Kompilierungen von Funkparametern zu erhalten, und
- seine Lokalisierung zu aktivieren, wenn sie noch nicht aktiviert ist, und seine Position und die Statistiken an die Basisstation zu schicken.

7. Funkmesssystem in einem Mobilfunknetz, das enthält:
- mindestens ein mobiles Supra-Endgerät nach Anspruch 6,
- mindestens ein mobiles Endgerät, Mess-Endgerät genannt, das Einrichtungen enthält, um:
• das vom mobilen Supra-Endgerät gesendete Signal zu empfangen und zu berücksichtigen,
• mindestens einen Funkparameter bezüglich einer aktuellen oder beabsichtigten Kommunikation des Mess-Endgeräts mit der Basisstation zu bestimmen, und
• den Funkparameter an das mobile Supra-Endgerät zu schicken, und
- mindestens eine Basisstation des Mobilfunknetzes, die Einrichtungen enthält, um:
• eine Funkmessanforderungsnachricht zu senden, und
• vom mobilen Supra-Endgerät die Position des mobilen Supra-Endgeräts sowie die Statistiken zu empfangen und zu berücksichtigen.

8. Nicht entfernbare oder teilweise oder ganz entfernbare Datenspeichereinrichtung, die EDV-Programmcodeanweisungen aufweist, die, wenn sie von einem Computer ausgeführt werden, diesen veranlassen, die Schritte eines Funkmessverfahrens nach einem der Ansprüche 1 bis 5 durchzuführen.

9. Computerprogramm, das von einem Kommunikationsnetz herunterladbar und/oder auf einem computerlesbaren Träger gespeichert und/oder von einem Mikroprozessor ausführbar ist, das Anweisungen enthält, die, wenn sie vom Computer oder vom Mikroprozessor ausgeführt werden, diesen veranlassen, die Schritte eines Funkmessverfahrens nach einem der Ansprüche 1 bis 5 durchzuführen.

## Claims

1. Method for taking radio measurements in a mobile network, comprising the following steps:
- a base station of said mobile network transmits a radio-measurement request message,
- said request message is received and taken into account by at least one mobile terminal, called the supra-mobile, located in the zone of coverage of the base station,
- said supra-mobile broadcasts a signal recognizable by the mobile terminals located in its vicinity,
- at least one mobile terminal, called the measurer terminal, following reception of said signal transmitted by the supra-mobile, responds to the supra-mobile by sending thereto at least one radio parameter relative to a communication that is in progress or envisaged of said measurer terminal with the base station,
- the supra-mobile compiles the received radio parameters to obtain compilations of radio parameters, which are called statistics, and
- the supra-mobile activates its localization if it is not already activated, and sends its position and said statistics to said base station.

2. Method for taking radio measurements according to Claim 1, **characterized in that** said base station chooses beforehand, dynamically, in at least one zone of predefined size, at least one subscriber mobile terminal to make thereof a supra-mobile.

3. Method for taking radio measurements according to Claim 1, **characterized in that** said supra-mobile is a pre-selected mobile terminal.

4. Method for taking radio measurements according to any one of Claims 1 to 3, **characterized in that** all the mobile terminals having received said signal from a supra-mobile respond to said supra-mobile by sending at least one radio parameter thereto.

5. Method for taking radio measurements according to any one of Claims 1 to 3, **characterized in that**, among the mobile terminals having received said signal from a supra-mobile, only those desiring a throughput higher than a certain threshold respond to said supra-mobile by sending at least one radio parameter thereto.

6. Mobile terminal, called the supra-mobile, comprising means for:
- receiving and taking into account a radio-measurement request message transmitted by a base station of a mobile network to which it is attached,
- broadcasting a signal recognizable by the mobile terminals located in its vicinity,
- receiving, from at least one mobile terminal, called the measurer terminal, having received said signal, at least one radio parameter relative to a communication that is in progress or envisaged of said measurer terminal with the base station,
- compiling the received radio parameters to obtain compilations of radio parameters, which are called statistics, and
- activating its localization if it is not already activated, and sending its position and said statistics to said base station.

7. System for taking radio measurements in a mobile network, comprising:
- at least one supra-mobile according to Claim 6,
- at least one mobile terminal, called the measurer terminal, comprising means for:
• receiving and taking into account said signal transmitted by said supra-mobile,
• determining at least one radio parameter relative to a communication that is in progress or envisaged of said measurer terminal with the base station, and
• sending said radio parameter to the supra-mobile, and
- at least one base station of said mobile network, comprising means for:
• transmitting a radio-measurement request message, and
• receiving, from said supra-mobile, and taking into account, the position of the supra-mobile and said statistics.

8. Irremovable, or partially or completely removable, data storage medium containing computer-program code instructions that, when they are executed by a computer, lead the latter to implement the steps of a method for taking radio measurements according to any one of Claims 1 to 5.

9. Computer program downloadable from a communication network and/or stored on a medium that is computer-readable and/or executable by a microprocessor, containing instructions that, when they are executed by the computer or by the microprocessor, lead the latter to implement the steps of a method for taking radio measurements according to any one of Claims 1 to 5.
